# FASCICULE DE BREVET EUROPEEN

(11) **EP 2 970 009 B1**
(45) Date de publication et mention de la délivrance du brevet: **06.09.2017**
(21) Numéro de dépôt: 14715048.6
(22) Date de dépôt: 13.03.2014
(51) Int. Cl.: C04B 28/06, C04B 7/32, C04B 7/345

(54) **NOUVEAU CLINKER SULFO-BÉLITIQUE DOPÉ EN PHOSPHORE ET SON PROCÉDÉ DE PRÉPARATION**
NEUARTIGE PHOSPHORDOTIERTE SCHWEFEL-BELIT-KLINKER UND SEIN HERSTELLUNGSVERFAHREN
NOVEL PHOSPHORUS-DOPED SULFO-BELITIC CLINKER AND PROCESS FOR ITS PREPARATION

(30) Priorité: 15.03.2013 FR 1352321
(43) Date de publication de la demande: 20.01.2016
(73) Titulaire: Vicat, 92095 Paris La Défense (FR)
(72) Inventeur: PASQUIER, Michel, F-69006 Lyon (FR); BARNES-DAVIN, Laury, F-38500 Voiron (FR); MERIC, Pascal, F-38300 Bourgoin-jallieu (FR); BEAUVENT, Guy, F-62720 Wierre Effroy (FR)
(74) Mandataire: Agasse, Stéphane
(86) Numéro de dépôt international: PCT/FR2014/050570
(87) Numéro de publication internationale: WO 2014/140487

(56) Documents cités:
- WO-A1-2010/086555
- WO-A1-2012/010800
- WO-A1-2012/065976
- WO-A2-2006/018569
- FR-A1- 2 941 448
- US-A1- 2010 132 590
- US-A1- 2011 259 247

## Description

La présente invention a pour objet un nouveau clinker sulfo-bélitique dopé en phosphore, un procédé de préparation de ce clinker, ainsi que l'utilisation du clinker pour la préparation de liant hydraulique et, par la suite, de coulis, béton ou mortier.

La fabrication des liants hydrauliques, et notamment celle des ciments, consiste essentiellement en une calcination d'un mélange de matières premières judicieusement choisies et dosées, aussi désigné par le terme de « cru ». La cuisson de ce cru donne un produit intermédiaire, le clinker, qui, broyé avec d'éventuels ajouts minéraux, donnera du ciment. Le type de ciment fabriqué dépend de la nature et des proportions des matières premières ainsi que du procédé de cuisson. On distingue plusieurs types de ciments : les ciments Portland (qui représentent la très grande majorité des ciments produits dans le monde), les ciments alumineux (ou d'aluminate de calcium), les ciments prompts naturels, les ciments sulfo-alumineux, les ciments sulfo-bélitiques et d'autres variétés intermédiaires. Comme ces familles ne sont pas totalement disjointes, il est préférable de les décrire par leurs constituants chimiques et minéralogiques.

Les ciments les plus répandus sont les ciments Portland. Les ciments Portland sont obtenus à partir de clinker Portland, obtenus après clinkérisation à une température de l'ordre de 1450°C d'un cru riche en carbonate de calcium dans un four.

La préparation de tels ciments présente le désavantage de dégager beaucoup de CO₂. L'industrie du ciment est donc aujourd'hui à la recherche d'une alternative valable au ciment Portland, c'est-à-dire des ciments présentant au moins les mêmes caractéristiques de résistance et de qualité que les ciments Portland, mais qui, lors de leur production, dégageraient moins de CO₂.

A ce titre, ces dernières années, les recherches se sont orientées vers les ciments dits sulfo-alumineux et sulfo-bélitiques, qui dégagent moins de CO₂ que les ciments Portland lors de leur production.

Le clinker étant le résultat d'une calcination à haute température, les éléments sont essentiellement présents sous forme d'oxydes. Les clinkers permettant la préparation de ciments sulfo-alumineux ou de ciments sulfo-bélitiques se rapportent à un procédé de fabrication d'un clinker à partir d'un cru constitué par un mélange comprenant les composés CaCO₃, Al₂O₃, et/ou Al(OH)₃ CaSO₄, SiO₂, Fe₂O₃ et/ou un produit contenant de la silice ou des silicates tel que l'argile, tous ces composés étant présents sous forme anhydre ou hydratée, individuellement ou en combinaison. Le cru peut être préparé avec toutes matières minérales naturelles ou synthétiques capables d'apporter du calcium, du silicium, du soufre, du fer et de l'aluminium.

Dans le cadre de ces recherches, de nombreux clinkers sulfo-alumineux ont été décrits. On peut par exemple citer la demande de brevet internationale WO-A-2006/018569 décrivant des clinkers sulfoalumineux bélitiques comprenant 5 à 25% de phase aluminoferrite calcique d'une composition correspondant à la formule générale C₂AF₍₁₋ₓ₎, avec x compris entre 0,2 et 0,8 ; 15 à 35% de phase sulfoaluminate de calcium « yee' limite » (C₄A₃$) ; 40 à 75% de bélite (C₂S) ; et de 0,01 à 10% d'une ou plusieurs phases mineures. Comme mentionné dans cette demande de brevet, de tels clinkers contiennent, en comparaison avec la phase alite (C₃S), la principale composante des ciments Portland, une quantité plus élevée de phase bélite (C₂S), ce qui est tout à fait bénéfique, puisque cela conduit à la réduction des émissions industrielles de CO₂ et de la consommation énergétique. D'autre part, la bélite contribue au développement de la résistance à long terme du ciment sulfo-alumineux bélitique. Cependant, la plupart des clinkers décrits dans cette demande de brevet contiennent du bore, ce qui présente un désavantage économique notable compte-tenu du prix et de la rareté de ce constituant.

La demande de brevet internationale WO-A-2010/086555 divulgue un clinker sulfo-alumineux comprenant comme composition phasique, par rapport au poids total du clinker: de 5 à 25 % de phase alumino ferrite calcique d'une composition correspondant à la formule générale C₂AₓF₍₁₋ₓ₎, avec x variant de 0,2 à 0,8; de 15 à 35% de phase sulfoaluminate de calcium correspondant à la formule C₄A_{3-y}$F_{y} avec y variant de 0 à 0,5; de 10 à 50% de bélite C₂S; et de 2 à 25% de silicate de calcium dopé au bore correspondant à la formule C₁₁S₄B.

La demande de brevet internationale WO-A-2012/010800 décrit quant à elle des clinkers sulfo-bélitiques dopés en fer comprenant de 5 à 60 % de phase sulfoaluminate de calcium dopé en fer correspondant à la formule C₄AₓF_{y}$_{z} avec x variant de 2 à 3, y variant de 0 à 0.5 et y étant différent de 0, et z variant de 0.8 à 1.2 ; de 0 à 25 % de phase aluminoferrite calcique d'une composition correspondant à la formule générale C₆A_{x'}F_{y'}, avec x' variant de 0 à 1.5 et y' variant de 0.5 à 3 ; de 20 à 70% de phase bélite C₂S ; et moins de 10% de phase C₁₁S₄B. Le dopage en fer est décrit comme permettant la préparation de ciments présentant une réactivité hydraulique et une résistance accrue en comparaison des clinkers décrits dans la demande de brevet internationale WO 2006/018569, tout en permettant de réduire les émissions de CO₂ de près de 35% lors de leur préparation en comparaison de clinkers de type Portland. De plus, ces clinkers ne nécessitent pas la présence de bore ni l'adjonction d'additifs pour améliorer la qualité des ciments et bétons préparés.

Le temps de prise des liants hydrauliques tels que le ciment, et plus généralement des coulis, bétons et mortiers préparés à partir de ces liants hydrauliques, commence à partir du mélange et malaxage à leur fabrication. Le transport entame donc ce temps de prise et doit être le plus rapide possible afin de préserver un maximum de manoeuvrabilité des coulis, bétons et mortiers pendant leur mise en place. A titre d'exemple, la durée moyenne pour le transport et la mise en oeuvre du béton est de deux heures, au-delà de cette durée, la prise du béton a déjà commencé et sa qualité n'est plus assurée.

Ainsi, bien que le temps de prise des liant hydrauliques préparés à partir des clinkers décrits dans l'art antérieur soient conformes aux normes en vigueur, il demeure toujours intéressant pour l'homme du métier d'augmenter ledit temps de prise autant que possible tout en maintenant la réactivité hydraulique et la résistance à court, moyen et long terme des matériaux préparés.

Il demeure donc intéressant d'identifier de nouveaux clinkers pouvant être préparés à des températures largement inférieures à 1425°C, réduisant ainsi fortement les émissions de CO₂ lors de leur préparation comparé au clinkers dits « Portland », et permettant l'obtention de liants hydrauliques bénéficiant d'un temps de prise accru tout en maintenant leur réactivité hydraulique et leur résistance à court, moyen et long terme.

Dans le passé, de nombreuse publications ont fait état d'un lien existant entre un temps de prise rapide et la présence dans le clinker de la phase C₄A₃$. Ainsi, dans un article intitulé « Understanding expansion in calcium sulfoaluminate-belite cements », Cement and Concrete Research 42 (2012), 51-60, Chen et al. expliquent que les ciments sulfoalumineux bélitiques ont démontré un temps de prise rapide du fait de la réactivité de la phase C₄A₃$. De même, « Characteristics of cement pastes containing sulphoaluminate and belite prepared from nano-materials », Construction and building materials 38 (2013) 14-21, El-Didamony et al. rappellent que les ciments contenant de l'anhydrite présentent un temps de prise plus court et une meilleure résistance aux courtes échéances.

Il a maintenant été trouvé de façon tout à fait surprenante que le dopage en phosphore de certains clinkers sulfo-bélitique permettait d'augmenter significativement le temps de prise des liants hydrauliques préparés à partir de ces clinkers tout en présentant une réactivité hydraulique et une résistance comparable à celles des ciments préparés à partir des clinkers décrits dans la demande de brevet internationale WO-A-2012/010800, et en permettant de réduire les émissions de CO₂ de près de 35% lors de leur préparation en comparaison de clinkers de type Portland.

La présente invention a donc tout d'abord pour objet un clinker sulfo-alumineux comprenant comme composition phasique, par rapport au poids total du clinker :
- de 5 à 60 % de phase sulfoaluminate de calcium dopé en fer correspondant à la formule C₄AₓFy$_{z} avec
   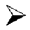 x variant de 2 à 3,
   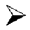 y variant de 0.05 à 0.5,
   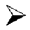 et z variant de 0.8 à 1.2 ;
- de 0 à 25 % de phase aluminoferrite calcique d'une composition correspondant à la formule générale C₆A_{x'}F_{y'}, avec x' variant de 0 à 1.5 et y' variant de 0.5 à 3 ; et
- de 20 à 70% de phase bélite C₂S ; et
- moins de 10% de phase C₁₁S₄B ;
ledit clinker comprenant plus de 0.3% de P₂O₅.

Le clinker selon la présente invention permet la préparation de liants hydrauliques bénéficiant d'un temps de prise significativement accru en comparaison des liants hydrauliques préparés à partir des clinkers décrits dans l'art antérieur, notamment dans la demande de brevet internationale WO-A-2012/010800. De plus, les liants hydrauliques ainsi préparés présentent une réactivité hydraulique et une résistance comparable à celles des ciments préparés à partir des clinkers décrits dans l'art antérieur tout en permettent de réduire les émissions de CO₂ de près de 35% lors de leur préparation en comparaison de clinkers de type Portland.

Dans le cadre de la présente invention, les notations suivantes sont adoptées pour désigner les composants minéralogiques du ciment :
- C représente CaO ;
- A représente Al₂O₃ ;
- F représente Fe₂O₃ ;
- S représente SiO₂ ; et
- $ représente SO₃.

Ainsi, par exemple, la phase aluminoferrite calcique d'une composition correspondant à la formule générale C₆A_{x'}F_{y'} correspond en réalité à une phase (CaO)_{6.}(Al₂O₃)_{x'}(Fe₂O₃)_{y'}.

De plus, dans le cadre de la présente invention, les proportions exprimées en % correspondent à des pourcentages massiques par rapport au poids total de l'entité (clinker ou liant hydraulique) considérée.

De préférence, la présente invention a pour objet un clinker sulfo-bélitique tel que défini précédemment dans lequel les caractéristiques suivantes sont choisies seules ou en combinaison :
- le clinker contient de 10 à 50% de phase sulfoaluminate de calcium dopé en fer C₄AₓFy$_{z} ;
- x varie de 2.1 à 2.9, de préférence de 2.2 à 2.8;
- y varie de 0.1 à 0.5 ;
- la phase sulfoaluminate de calcium contient de l'alumine, du fer et du soufre avec x variant de 2.1 à 2.9, de préférence de 2.2 à 2.8, y variant de 0.05 à 0.5, de préférence de 0.1 à 0.5, et z variant de 0.8 à 1.2 ;
- le clinker contient de 0 à 20% de phase aluminoferrite calcique C₆A_{x'}Fy_{'};
- x' varie de 0.65 à 1.3 ;
- y' varie de 1.5 à 2.5 ;
- la phase aluminoferrite calcique C₆A_{x'}F_{y'} contient de l'alumine et du fer avec x' variant de 0.65 à 1.3 et y' variant de 1.5 à 2.5 ;
- le clinker contient de 30 à 55% de phase bélite C₂S; et/ou
- le clinker contient moins 5% de phase C₁₁S₄B, de préférence encore moins de 2% de phase de phase C₁₁S₄B. De façon toute à fait préférée, le clinker est exempt de phase C₁₁S₄B.

Préférentiellement, les clinkers selon l'invention sont totalement exempts de bore additionné de manière intentionnelle

Le clinker selon la présente invention est donc dopé en P₂O₅. De préférence, la présente invention a pour objet un clinker sulfo-bélitique tel que défini précédemment contenant plus de 0.4% de P₂O₅, de préférence plus de 0.5% de P₂O₅, de préférence encore plus de 0.6% de P₂O₅, de façon tout à fait préférée plus de 0.7% de P₂O₅.

D'autres phases minoritaires peuvent apparaître dans la constitution du clinker. Ces phases mineures peuvent être constituées de la chaux libre CaOl, de l'anhydrite C$, de la Géhlénite C₂AS, de la Mayenite C₁₂A₇, de la Périclase MgO, de la Perovskite CT, C₃FT, C₄FT₂. De façon préférée, le clinker selon l'invention contient :
- moins de 3% de CaOl, de préférence moins de 1% de CaOl ;
- moins de 5% de C$, de préférence moins de 2% de C$ ; et/ou
- moins de 10% de C₂AS, de préférence moins de 5% de C₂AS.

Le clinker selon la présente invention doit être préparé dans des conditions précises afin d'éviter tout phénomène de collage au cours de la cuisson. Ainsi, la présente invention a également pour objet un procédé de préparation d'un clinker tel que décrit précédemment, comprenant les étapes suivantes :
préparation d'un cru à partir des matières premières suivantes :
   - de 0.1 à 40% de bauxite, marnes, boues rouges et/ou de toutes autres roches sédimentaires, métamorphiques ou magmatiques;
   - de 0.1 à 12% de gypse, borogypse, phosphogypse, desulfogypse, anhydrite et/ou hémihydrate ;
   - de 0.1 à 65% de calcaire et ou de calcaires phosphatés, et/ou de toutes autres roches sédimentaires, métamorphiques ou magmatiques;
   - de 0.1 à 20 % d'apatite, d'hydroxapatite, et/ou de tout minerai de phosphate, ou phosphate de calcium ou de phosphates naturels ou synthétiques, minéraux ou organiques,
   - de 0 à 12% de quartz, silice, silice expansée, fumée de silice ou de toutes autres roches sédimentaires, métamorphiques ou magmatiques; et
   - de 0 à 12% d'oxyde de fer et/ou sulfate de fer et/ou sulfures de fer;
      2) mélange (éventuellement par cobroyage) des matières premières,
      3) cuisson du mélange des matières premières à une température T2 allant de 1150°C à 1300°C selon les étapes suivantes :
         a) passage de la température ambiante à une température allant de 800°C à 1200°C sur une période de temps t1 allant de 20 à 500 minutes,
         b) montée en température jusqu'à la température finale souhaitée T2, sur une période de temps t2 allant de 15 à 60 minutes,
         c) maintien de la température à T2, sur une période de temps t3 allant de 0 à 80 minutes,
         d) diminution de la température de T2 à T3, T3 étant supérieure ou égale à 1100°C, sur une période de temps t4 allant de 0 à 15 minutes,
         e) trempe et refroidissement rapide du clinker jusqu'à la température ambiante, sur une période de temps t5 allant de 5 à 60 minutes.

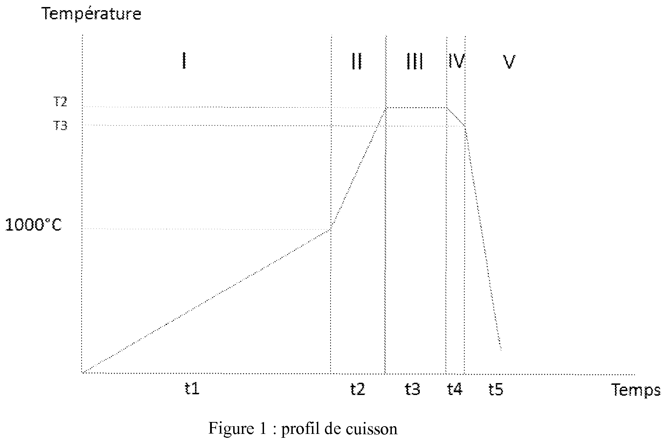

Pour plus de clarté, le profil de température suivi pour procéder à la cuisson du cru selon le procédé de l'invention est illustré par la Figure 1.

De préférence, l'étape de cuisson du procédé selon la présente invention est conduite à une température T2 allant de 1250°C à 1300°C.

De façon préférée, l'étape de cuisson du procédé selon la présente invention est conduite à une température T2, dans les conditions suivantes :
a) passage de la température ambiante à 1000°C sur une période de temps t1 allant de 90 min à 420 minutes,
b) montée en température jusqu'à la température finale souhaitée T2, sur une période de temps t2 allant de 25 à 45 minutes,
c) maintien de la température à T2, sur une période de temps t3 allant de 0 et 70 minutes,
d) diminution de la température de T2 à 1200°C, sur une période de temps t4 allant de 5 à 10 minutes,
e) trempe et refroidissement rapide du clinker jusqu'à la température ambiante en 10 minutes.

Le clinker selon la présente invention peut être préparé à partir de différentes matières premières telles que les boues rouges, la bauxite, le calcaire, les marnes, le gypse ou toute autre source de sulfate de calcium, la silice, les oxydes de fer, les sulfate de fer et les sulfures de fer naturels ou leurs sous-produits respectifs, et toute matière minérale capable d'apporter CaO, Al₂O₃, Fe₂O₃, SiO₂ et SO₃ en quantités adéquates ou en mélanges.

La qualité de la cuisson, et notamment les respects en tout point d'une atmosphère oxydante et des températures maximum de 1350°C, est fondamentale. La préparation des clinkers selon l'invention se fera donc dans un four permettant le respect de ces conditions. A titre d'exemple de fours appropriés pour préparer les clinkers selon la présente invention, on peut citer le four décrit dans la demande de brevet internationale publiée sous le numéro WO-A-2009/122065. Le four décrit dans cette demande de brevet est particulièrement approprié pour la préparation de clinkers selon l'invention car il contribue à respecter le profil thermique précédemment décrit.

Le clinker selon la présente invention peut être utilisé pour préparer un liant hydraulique, par exemple du ciment, par broyage et éventuel ajout de gypse, d'anhydrite ou d'hémihydrate. La présente invention concerne donc également un liant hydraulique comprenant un clinker tel que décrit précédemment sous forme broyé. Préférentiellement, le liant hydraulique selon la présente invention comprend également un ajout de gypse, d'anhydrite ou d'hémihydrate, dans des proportions pouvant aller jusqu'à 20%.

Le liant hydraulique selon la présente invention peut également comprendre des ajouts du même type que ceux utilisés pour le ciment Portland tels que par exemple le calcaire, les pouzzolanes naturelles et artificielles, le laitier de haut fourneau, les cendres volantes de foyers au charbon et les fumées de silice. Cet ajout est réalisé par mélange avant ou après le broyage des constituants, par mélange des poudres ou par cobroyage. La prise du liant est alors la résultante de l'activation des ajouts par le clinker. En conséquence l'économie de CO₂ par rapport à un ciment de type CEM I (suivant la norme EN 197-1) peut être considérable, allant jusqu'à 90% de réduction des émissions de CO₂ selon la teneur en ajout.
De plus, pour améliorer les performances mécaniques du liant hydraulique, on pourra ajouter de 1 à 5% de calcaire (CaCO₃) finement broyé ou « filler ». L'ajout de « filler » peut être réalisé par mélange avant ou après le broyage des constituants, par mélange des poudres ou par cobroyage.

Enfin, la présente invention concerne également les différents produits préparés à partir du liant décrit précédemment, en particulier les coulis, les bétons et les mortiers. Ainsi, la présente invention a également pour objet un coulis, un béton ou un mortier comprenant le liant hydraulique tel que décrit précédemment.

La présente invention peut être illustrée de façon non limitative par les exemples suivants.

### Exemple 1 - Clinkers 1 et 2

Plusieurs crus ont été préparés avec les matières premières dont les analyses chimiques sont rapportées en pourcentages massiques dans les tableaux suivants.

### Bauxite

**Tableau 1**

| **Éléments** | **Bauxite 1** | **Bauxite 2** |
|---|---|---|
| **SiO₂ (en %)** | 22.13 | 14.24 |
| **Al₂O₃ (en %)** | 38.8 | 52.23 |
| **CaO (en %)** | 2.44 | 1.2 |
| **MgO (en %)** | 0.17 | 0.14 |
| **Fe₂O₃ (en %)** | 20.31 | 12.44 |
| **TiO₂ (en %)** | 1.85 | 3.19 |
| **K₂O (en %)** | 0.1 | 0.06 |
| **Na₂O (en %)** | 0 | 0 |
| **P₂O₅ (en %)** | 0.18 | 0.21 |
| **Mn₂O₃ (en %)** | 0.03 | 0.03 |
| **SO₃ (en %)** | 0.07 | 0.41 |
| **Autres (en %)** | 0.17 | 0.03 |
| **Perte au feu (en %)** | 13.75 | 15.4 |
| **Total** | **100** | **99.58** |

On entend par perte au feu la perte de masse constatée après cuisson à 950°C.
Bauxites 1 et 2 : Bauxite origine Sodicapei Villeveyrac.

### Calcaire

**Tableau 2**

| **Éléments** | **Calcaire 1** | **Calcaire 2** |
|---|---|---|
| **SiO₂ (en %)** | 1.77 | 1.55 |
| **Al₂O₃ (en %)** | 2.82 | 0.38 |
| **CaO (en %)** | 50.8 | 54.51 |
| **MgO (en %)** | 0.82 | 0.33 |
| **Fe₂O₃ (en %)** | 0.79 | 0.21 |
| **TiO₂ (en %)** | 0.18 | 0.03 |
| **K₂O (en %)** | 0.05 | 0.04 |
| **Na₂O (en %)** | 0.02 | 0 |
| **P₂O₅ (en %)** | 0.05 | 0.01 |
| **Mn₂O₃ (en %)** | 0.01 | 0.01 |
| **SO₃ (en %)** | 1.03 | 0.02 |
| **Autres (en %)** | 0.03 | 0 |
| **Perte au feu (en %)** | 40.94 | 42.87 |
| **Total** | **99.31** | **99.96** |

On entend par perte au feu la perte de masse constatée après cuisson à 950°C.

### Anhydrite et Gypse

**Tableau 3**

| **Éléments** | **Gypse 1** | **Gypse 2** |
|---|---|---|
| **SiO₂ (en %)** | 0.33 | 0 |
| **Al₂O₃ (en %)** | 0.31 | 0 |
| **CaO (en %)** | 31.18 | 32.81 |
| **MgO (en %)** | 0.02 | 0 |
| **Fe₂O₃ (en %)** | 0.27 | 0.02 |
| **TiO₂ (en %)** | 0.05 | 0.02 |
| **K₂O (en %)** | 0.05 | 0.03 |
| **Na₂O (en %)** | 0.05 | 0.14 |
| **P₂O₅ (en %)** | 0.41 | 0.02 |
| **Mn₂O₃ (en %)** | 0 | 0 |
| **SO₃ (en %)** | 43.99 | 46.29 |
| **Autres (en %)** | 2.32 | 0.02 |
| **Perte au feu (en %)** | 20.28 | 20.72 |
| **Total** | **99.26** | **100.07** |

On entend par perte au feu la perte de masse constatée après cuisson à 950°C.
Gypse 1 : sous produit industriel issu de la fabrication d'acide phosphorique
Gypse 2 : produit de laboratoire de la marque Merck.

### Silice et oxydes de fer

**Tableau 4**

| **Éléments** | **Silice** | **Hydroxyapatite** | **Oxyde de Fer** |
|---|---|---|---|
| **SiO₂ (en %)** | 99.31 | 0 | 0 |
| **Al₂O₃ (en %)** | 0 | 0 | 0 |
| **CaO (en %)** | 0.1 | 55.79 | 0 |
| **MgO (en %)** | 0 | 0 | 0 |
| **Fe₂O₃ (en %)** | 0.2 | 0 | 100 |
| **TiO₂ (en %)** | 0 | 0 | 0 |
| **K₂O (en %)** | 0.04 | 0 | 0 |
| **Na₂O (en %)** | 0.01 | 0 | 0 |
| **P₂O₅ (en %)** | 0 | 42.42 | 0 |
| **Mn₂O₃ (en %)** | 0.02 | 0 | 0 |
| **SO₃ (en %)** | 0 | 0 | 0 |
| **Autres (en %)** | 0.02 | 0 | 0 |
| **Perte au feu (en %)** | 0.15 | 1.79 | 0 |
| **Total** | **99.85** | **100** | **100** |

On entend par perte au feu la perte de masse constatée après cuisson à 950°C.

Silice pure de type Silice Sifraco.

Oxyde de fer pur ou issu de l'extraction minière.

La source de phosphore inclut l'utilisation d'hydroxyapatite de laboratoire et/ou de toute source de P₂O₅ d'origine organique ou minérale

### Préparation des clinkers 1 et 2

Pour chaque clinkers, un mélange intime des différents constituants a été effectué dans les proportions rapportées dans le tableau 5 suivant (tout passant à 100 µm).

**Tableau 5**

| | **Bauxite** | | **Gypse** | | **Anhydrite (en %)** | **Calcaire** | | **Silice (en %)** | **Oxyde de fer (en %)** | **Hydroxyapatite (en %)** |
|---|---|---|---|---|---|---|---|---|---|---|
| | ***n°*** | **%** | ***n°*** | **%** | | ***n°*** | **%** | | | |
| **Clinker 1** | *1* | 33.6 | *1* | 11.2 | - | *1* | 55.2 | - | - | - |
| **Clinker 2** | *2* | 24.4 | *2* | 11.8 | | *2* | 52.5 | 6.2 | 4 | 1.1 |

Une cuisson dans un four à passage tel que celui décrit dans la demande de brevet WO-A-2009/122065, à été réalisée à 1295°C pendant 69 minutes.

Le mélange cru est introduit dans la tour de préchauffage et chauffé depuis la température ambiante jusqu'à 1050°C en 410 minutes au fur et à mesure de sa descente dans la tour, par les gaz remontant à contre-courant dans celle-ci.

La matière est ensuite admise dans la section horizontale du four à passage via un extracteur, et amenée jusqu'à la zone de clinkérisation (1295°C) sur une période de 30 minutes et la température est maintenue pendant 69 minutes.

En sortie de la zone de clinkérisation, la température diminue jusqu'à 1200°C sur une période de 6 minutes.

Enfin, le clinker est envoyé dans le refroidisseur où il subit une trempe rapide pour atteindre la température ambiante en 10 minutes.

La chimie « réelle » des clinkers obtenus est rapportée dans le Tableau 6 suivant.

**Tableau 6**

| | **Clinker 1** | **Clinker 2** |
|---|---|---|
| **SiO₂ (en %)** | 12.09 | 15.06 |
| **Al₂O₃ (en %)** | 20.42 | 18.39 |
| **CaO (en %)** | 46.62 | 47.68 |
| **MgO (en %)** | 0.67 | 0.31 |
| **Fe₂O₃ (en %)** | 10.11 | 10.06 |
| **TiO₂ (en %)** | 1.13 | 1.24 |
| **K₂O (en %)** | 0.11 | 0.07 |
| **Na₂O (en %)** | 0.03 | 0.01 |
| **P₂O₅ (en %)** | 0.19 | 0.78 |
| **Mn₂O₃ (en %)** | 0.02 | 0.01 |
| **SO₃ (en %)** | 7.59 | 5.81 |
| **Autres (en %)** | 0.3 | 0.03 |
| **Perte au feu (en %)** | 0.39 | 0.44 |
| **Total** | **99.67** | **99.89** |

On entend par perte au feu la perte de masse constatée après cuisson à 950°C.

Les phases cristallographiques obtenues pour chaque clinker et ainsi que leur pourcentage sont rapportées dans le Tableau 7 suivant.

**Tableau 7**

| | | **Clinker 1** | **Clinker 2** |
|---|---|---|---|
| **C₄AₓF_{y}$_{z}** | *x* | 2.27 | 2.57 |
| | *y* | *0.29* | *0.42* |
| | *z* | *1* | *1* |
| | % | 45 | 45.6 |
| **C₆A_{x'}F_{y'}** | *x'* | *1* | *0.9* |
| | *y'* | *2.37* | *2.1* |
| | % | 9.8 | 0 |
| **C₂S_{β} (en %)** | | 28.9 | 27.9 |
| **C₂S_{α'h} (en %)** | | 5.5 | 11.0 |
| **Autres phases (en %)** | | 10.8 | 15.5 |

### Exemple 2 - Ciment 1 à 3

### Préparation du ciment 1

Le clinker 1 obtenu selon l'exemple 1 précédent a été broyé avec 10% d'anhydrite de sorte que le refus à 100 µm soit nul.

Le ciment ainsi obtenu à partir du clinker 1 est désigné par ciment 1

### Préparation des ciments 2 et 3

Les ciments 2 et 3 sont respectivement préparés par broyage des clinkers 1 et 2 avec 10.0% d'anhydrite et 5% de filler calcaire de sorte que le refus à 100 µm soit nul.

### Temps de prise

Le début de prise et la fin de prise sont évalués selon la norme EN196-3 sur pâte pure ciment avec recherche du E/C par mesure de la consistance grâce à l'appareil de Vicat.

Les temps de prise des ciments 1 à 3 sont rapportés dans le Tableau 8 suivant.

**Tableau 8**

| | **Ciment 1** | **Ciment 2** | **Ciment 3** |
|---|---|---|---|
| **E/C** | 0.32 | 0.3 | 0.24 |
| **Début de prise (en min)** | 15 | 23 | 147 |
| **Fin de prise (en min)** | 40 | 65 | 222 |

Le temps de début de prise obtenu avec le ciment 1 est très faible, de l'ordre de 15 min.

L'addition de filler calcaire au ciment (ciment 2) n'affecte que de manière très limitée le temps de début de prise dudit ciment.

Au contraire, le ciment 3 possède un temps de début de prise significativement augmenté en comparaison des ciments 1 et 2.

Il ressort clairement de ces résultats que seule l'augmentation de la teneur en P₂O₅ explique cette augmentation du temps de début de prise.

### Résistance mécanique

A partir de ces ciments, on réalise un mortier selon la norme EN196-1 dont la composition est la suivante :
- 450g de ciment ;
- 1350g de sable normalisé ;
- 225g d'eau.

La résistance mécanique du mortier est mesurée sur des éprouvettes de mortiers prismatiques 4x4x16 cm³ préparés à 20°C en utilisant des moules métalliques et démoulées à 24h. Les éprouvettes sont conservées ensuite dans l'eau à 20°C jusqu'à l'échéance de mesure.

La résistance des échantillons obtenus est testée selon la norme EN 196-1.

Les résultats des mesures de la résistance en compression (Rc) sont rapportés dans le Tableau 9 suivant.

**Tableau 9**

| | **Mesures de résistances en mortier** | | | |
|---|---|---|---|---|
| | **E/C** | **Résistances en compression (MPa)** | | |
| | | **2 jours** | **7 jours** | **28 jours** |
| **Ciment 1** | 0.5 | 32.6 | 42.1 | 42.4 |
| **Ciment 2** | 0.5 | 30.0 | 42.8 | 47.9 |
| **Ciment 3** | 0.5 | 31.7 | 36.6 | 43.9 |

Les résistances mécaniques à court et long termes des ciments 1 à 3 sont similaires.

Ainsi, l'ajout de P₂O₅ dans la composition du clinker permet d'augmenter de façon significative le temps de prise (voir le Tableau 8 précédent) sans diminution des propriétés mécaniques à court et long terme des ciments finalement préparés (voir le Tableau 9 ci-dessus).

## Revendications

1. Clinker sulfo-alumineux comprenant comme composition phasique, par rapport au poids total du clinker :
- de 5 à 60 % de phase sulfoaluminate de calcium dopé en fer correspondant à la formule C₄AₓF_{y}$_{z} avec
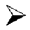 x variant de 2 à 3,
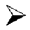 y variant de 0.05 à 0.5,
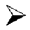 et z variant de 0.8 à 1.2 ;
- de 0 à 25 % de phase aluminoferrite calcique d'une composition correspondant à la formule générale C₆A_{x'}F_{y'}, avec x' variant de 0 à 1.5 et y' variant de 0.5 à 3 ; et
- de 20 à 70% de phase bélite C₂S ; et
- moins de 10% de phase C₁₁S₄B ;
ledit clinker comprenant plus de 0.3% de P₂O₅.

2. Clinker selon la revendication 1, **caractérisé en ce qu'**il contient de 10 à 50% de phase sulfoaluminate de calcium dopé en fer C₄AₓFy$_{z}.

3. Clinker selon la revendication 1 ou 2, **caractérisé en ce que** x varie de 2.1 à 2.9.

4. Clinker selon l'une des revendications 1 à 3, **caractérisé en ce qu'**il contient de 0 à 20% de phase aluminoferrite calcique C₆A_{x'}F_{y'}.

5. Clinker selon l'une des revendications 1 à 4, **caractérisé en ce que** x' varie de 0.65 à 1.3 et/ou y' varie de 1.5 à 2.5

6. Clinker selon l'une des revendications 1 à 5, **caractérisé en ce qu'**il contient de 30% à 55% de phase bélite C₂S.

7. Clinker selon l'une des revendications 1 à 6, **caractérisé en ce qu'**il contient moins de 5% de phase C₁₁S₄B.

8. Clinker selon l'une des revendications 1 à 7, **caractérisé en ce qu'**il contient plus de 0.5% de P₂O₅

9. Clinker selon l'une des revendications 1 à 8, **caractérisé en ce qu'**il contient moins de 3% de CaOl.

10. Clinker selon l'une des revendications 1 à 9, **caractérisé en ce qu'**il contient moins de 5% de C$.

11. Clinker selon l'une des revendications 1 à 10, **caractérisé en ce qu'**il contient moins de 10% de C₂AS.

12. Procédé de préparation d'un clinker selon l'une des revendications 1 à 11 comprenant les étapes suivantes :
1) préparation d'un cru à partir des matières premières suivantes :
- de 0.1 à 40% de bauxite, marnes, boues rouges et/ou de toutes autres roches sédimentaires, métamorphiques ou magmatiques ;
- de 0.1 à 12% de gypse, borogypse, phosphogypse, desulfogypse, anhydrite et/ou hémihydrate ;
- de 0.1 à 65% de calcaire et ou de calcaires phosphatés, et/ou de toutes autres roches sédimentaires, métamorphiques ou magmatiques ;
- de 0.1 à 20 % d'apatite, d'hydroxapatite, et/ou de tout minerai de phosphate, ou phosphate de calcium ou de phosphates naturels ou synthétiques, minéraux ou organiques,
- de 0 à 12% de quartz, silice, silice expansée, fumée de silice ou de toutes autres roches sédimentaires, métamorphiques ou magmatiques; et
- de 0 à 12% d'oxyde de fer et/ou sulfate de fer et/ou sulfures de fer;
2) mélange (éventuellement par cobroyage) des matières premières,
3) cuisson du mélange des matières premières à une température T2 allant de 1150°C à 1300°C selon les étapes suivantes :
a) passage de la température ambiante à une température allant de 800°C à 1200°C sur une période de temps t1 allant de 20 à 500 minutes,
b) montée en température jusqu'à la température finale souhaitée T2, sur une période de temps t2 allant de 15 à 60 minutes,
c) maintien de la température à T2, sur une période de temps t3 allant de 0 à 80 minutes,
d) diminution de la température de T2 à T3, T3 étant supérieure ou égale à 1100°C, sur une période de temps t4 allant de 0 à 15 minutes,
e) trempe et refroidissement rapide du clinker jusqu'à la température ambiante, sur une période de temps t5 allant de 5 à 60 minutes.

13. Liant hydraulique comprenant un clinker selon l'une quelconque des revendications 1 à 11.

14. Coulis comprenant un liant hydraulique selon la revendication 13.

15. Béton comprenant un liant hydraulique selon la revendication 13.

16. Mortier comprenant un liant hydraulique selon la revendication 13.

## Patentansprüche

1. Schwefel-aluminiumhaltiger Klinker, umfassend, als phasische Zusammensetzung, mit Bezug auf das Gesamtgewicht des Klinkers:
- von 5 bis 60% Kalzium-Schwefelaluminat-Phase, dotiert mit Eisen, entsprechend der Formel C₄AₓF_{y}$_{z}, wobei
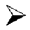 x von 2 bis 3 variiert,
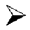 y von 0,05 bis 0,5 variiert,
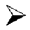 und z von 0,8 bis 1,2 variiert;
- von 0 bis 25% Kalzium-Aluminoferrit-Phase einer Zusammensetzung, entsprechend der allgemeinen Formel C₆A_{x'}F_{y'}, wobei x' von 0 bis 1,5 variiert und y' von 0,5 bis 3 variiert; und
- von 20 bis 70% Belit C₂S-Phase; und
- weniger als 10% C₁₁S₄B-Phase;
wobei der Klinker mehr als 0,3% P₂O₅ umfasst.

2. Klinker nach Anspruch 1, **dadurch gekennzeichnet, dass** er von 10 bis 50% Kalzium-Schwefelaluminat-Phase, dotiert mit Eisen C₄AₓF_{y}$_{z} enthält.

3. Klinker nach Anspruch 1 oder 2, **dadurch gekennzeichnet, dass** x von 2,1 bis 2,9 variiert.

4. Klinker nach einem der Ansprüche 1 bis 3, **dadurch gekennzeichnet, dass** er von 0 bis 20% Kalzium-Aluminoferrit-Phase C₆A_{x'}F_{y'} umfasst.

5. Klinker nach einem der Ansprüche 1 bis 4, **dadurch gekennzeichnet, dass** x' von 0,65 bis 1,3 variiert und/oder y' von 1,5 bis 2,5 variiert.

6. Klinker nach einem der Ansprüche 1 bis 5, **dadurch gekennzeichnet, dass** er von 30% bis 55% Belit C₂S-Phase enthält.

7. Klinker nach einem der Ansprüche 1 bis 6, **dadurch gekennzeichnet, dass** es weniger als 5% C₁₁S₄B-Phase enthält.

8. Klinker nach einem der Ansprüche 1 bis 7, **dadurch gekennzeichnet, dass** er mehr als 0,5% P₂O₅ enthält.

9. Klinker nach einem der Ansprüche 1 bis 8, **dadurch gekennzeichnet, dass** er weniger als 3% CaOl enthält.

10. Klinker nach einem der Ansprüche 1 bis 9, **dadurch gekennzeichnet, dass** er weniger als 5% C$ enthält.

11. Klinker nach einem der Ansprüche 1 bis 10, **dadurch gekennzeichnet, dass** er weniger als 10% C₂AS enthält.

12. Verfahren zur Herstellung eines Klinkers nach einem der Ansprüche 1 bis 11 umfassend die folgenden Schritte:
1) Herstellen eines Rohziegels auf der Grundlage der folgenden Rohmaterialien:
- von 0,1 bis 40% Bauxit, Mergel, Rotschlämme und/oder alle anderen sedimentären, metamorphen oder magmatischen Gesteine;
- von 0,1 bis 12% Gips, Borgips, Phosphogips, Desulfogips, Anhydrit und/oder Halbhydrat;
- von 0,1 bis 65% Kalkstein und/oder phosphathaltige Kalksteine und/oder alle andern sedimentären, metamorphen oder magmatischen Gesteine;
- von 0,1 bis 20% Apatit, Hydroxapatit und/oder jedes Phosphatmineral oder Kalziumphosphat oder natürliche oder synthetische, mineralische oder organische Phosphate,
- von 0 bis 12% Quarz, Siliziumoxid, expandiertes Siliziumoxid, Silicastaub oder alle anderen sedimentären, metamorphen oder magmatischen Gesteine; und
- von 0 bis 12% Eisenoxid und/oder Eisensulfat und/oder Eisensulfide
2) Mischen (eventuell durch Co-Vermahlen) der Rohmaterialien,
3) Brennen der Mischung der Rohmaterialien bei einer Temperatur T2, die von 1150°C bis 1300°C reicht, gemäß den folgenden Schritten:
a) Übergehen von der Raumtemperatur zu einer Temperatur, die von 800°C bis 1200°C reicht, in einem Zeitraum t1, der von 20 bis 500 Minuten reicht,
b) Erhöhen der Temperatur bis zur endgültigen gewünschten Temperatur T2 in einem Zeitraum t2, der von 15 bis 60 Minuten reicht,
c) Beibehalten der Temperatur bei T2 während eines Zeitraums t3, der von 0 bis 80 Minuten reicht,
d) Verringern der Temperatur von T2 auf T3, wobei T3 höher als oder gleich wie 1100°C ist, in einem Zeitraum t4, der von 0 bis 15 Minuten reicht,
e) schnelles Aushärten und Abkühlen des Klinkers bis zur Raumtemperatur in einem Zeitraum t5, der von 5 bis 60 Minuten reicht.

13. Hydraulisches Bindemittel, umfassend einen Klinker nach einem beliebigen der Ansprüche 1 bis 11.

14. Fugenmörtel, umfassend ein hydraulisches Bindemittel nach Anspruch 13.

15. Beton, umfassend ein hydraulisches Bindemittel nach Anspruch 13.

16. Mörtel, umfassend ein hydraulisches Bindemittel nach Anspruch 13.

## Claims

1. A sulfo-aluminous clinker comprising as a phasic composition, relative to the total weight of the clinker:
- from 5 to 60% of iron-doped calcium sulfoaluminate phase corresponding to the formula C₄AₓF_{y}$_{z} with
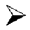 x varying from 2 to 3,
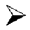 y varying from 0.05 to 0.5,
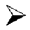 and z varying from 0.8 to 1.2;
- from 0 to 25% of calcic aluminoferrite phase of a composition corresponding to the general formula C₆A_{x'}F_{y'}, x' varying from 0 to 1.5 and y' varying from 0.5 to 3; and
- from 20 to 70% of belite phase C₂S; and
- less than 10% of phase C₁₁S₄B;
said clinker comprising more than 0.3% of P₂O₅.

2. The clinker according to claim 1, **characterized in that** it contains from 10 to 50% of iron-doped calcium sulfoaluminate phase C₄AₓF_{y}$_{z}.

3. The clinker according to claim 1 or 2, **characterized in that** x varies from 2.1 to 2.9.

4. The clinker according to any of claims 1 to 3, **characterized in that** it contains from 0 to 20% of calcic aluminoferrite phase C₆A_{x'}F_{y'}.

5. The clinker according to any of claims 1 to 4, **characterized in that** x' varies from 0.65 to 1.3 and/or y' varies from 1.5 to 2.5.

6. The clinker according to any of claims 1 to 5, **characterized in that** it contains from 30% to 55% of belite phase C₂S.

7. The clinker according to any of claims 1 to 6, **characterized in that** it contains less than 5% of phase C₁₁S₄B.

8. The clinker according to any of claims 1 to 7, **characterized in that** it contains more than 0.5% of P₂O₅.

9. The clinker according to any of claims 1 to 8, **characterized in that** it contains less than 3% of CaOl.

10. The clinker according to any of claims 1 to 9, **characterized in that** it contains less than 5% of C$.

11. The clinker according to any of claims 1 to 10, **characterized in that** it contains less than 10% of C₂AS.

12. Process for preparing a clinker according to any of claims 1 to 11, comprising the following steps:
1) preparation of a raw mix from the following raw materials:
- from 0.1 to 40% of bauxite, marls, red muds and/or any other sedimentary, metamorphic or magmatic rocks;
- from 0.1 to 12% of gypsum, borogypsum, phosphogypsum, desulfogypsum, anhydrite and/or hemihydrate;
- from 0.1 to 65% of limestone and/or phosphated limestones, and/or any other sedimentary, metamorphic or magmatic rocks;
- from 0.1 to 20% of apatite, hydroxapatite, and/or any phosphate ore or calcium phosphate, or natural or synthetic phosphates, mineral or organic phosphates,
- from 0 to 12% of quartz, silica, expanded silica, silica fume or any other sedimentary, metamorphic or magmatic rocks; and
- from 0 to 12% of iron oxide and/or iron sulfate and/or iron sulfides;
2) mixing (possibly by co-grinding) of the raw materials,
3) firing of the mixture of the raw materials at a temperature T2 ranging from 1150°C to 1300°C according to the following steps:
a) switching from the ambient temperature to a temperature ranging from 800°C to 1200°C over a period of time t1 ranging from 20 to 500 minutes,
b) temperature raising up to the desired final temperature T2, over a period of time t2 ranging from 15 to 60 minutes,
c) maintaining of the temperature at T2, over a period of time t3 ranging from 0 to 80 minutes,
d) decreasing of the temperature from T2 to T3, T3 being greater than or equal to 1100°C over a period of time t4 ranging from 0 to 15 minutes,
e) quenching and rapid cooling of the clinker up to the ambient temperature over a period of time t5 ranging from 5 to 60 minutes.

13. A hydraulic binder comprising a clinker according to any one of claims 1 to 11.

14. A slurry comprising a hydraulic binder according to claim 13.

15. A concrete comprising a hydraulic binder according to claim 13.

16. A mortar comprising a hydraulic binder according to claim 13.
